# EUROPÄISCHE PATENTSCHRIFT

(11) **EP 1 607 313 B1**
(45) Veröffentlichungstag und Bekanntmachung des Hinweises auf die Patenterteilung: **06.05.2009**
(21) Anmeldenummer: 05105148.0
(22) Anmeldetag: 13.06.2005
(51) Int. Cl.: B62D 33/00

(54) **Schlepperbausatz sowie Verfahren zu seiner Montage**
Tractor kit and method for assembling the same
Tracteur en kit et méthode d'assemblage de celui-ci

(30) Priorität: 15.06.2004 DE 102004028932
(43) Veröffentlichungstag der Anmeldung: 21.12.2005
(73) Patentinhaber: MULAG FAHRZEUGWERK Heinz Wössner GmbH & CO. KG, 77728 Oppenau (DE)
(72) Erfinder: Esser, Peter, Dr. MULAG Fahrzeugwerk, 73104 Börtlingen (DE)
(74) Vertreter: Alber, Norbert

(56) Entgegenhaltungen:
- WO-A-98/46471
- DE-A1- 3 613 772
- US-A- 2 141 267
- US-A- 3 062 309
- US-A- 3 732 942
- US-A- 4 585 088
- US-A- 5 156 230

## Beschreibung

### I. Anwendungsgebiet

Die Erfindung betrifft ein Montageverfahren für Schlepper sowie einen diesbezüglichen Schlepperbausatz.

### II. Technischer Hintergrund

Schlepper werden für unterschiedliche Zwecke hergestellt, für die sie speziell gestaltet sind.

Eine Aufgabe sind Schlepper, wie sie zum Ziehen und engem Rangieren von Wägen auf ebenem, festem Untergrund benötigt werden, beispielsweise auf dem Vorfeld von Flughäfen, auf den Ladehöfen von Speditionen oder ähnlichem.

Die Schlepper sollen dabei selbst möglichst klein und kompakt sein, allerdings stark motorisiert und mit hohem Eigengewicht ausgestattet, um die Motorleistung mit genügend Traktion auf den Boden bringen zu können.

Wegen des vorhandenen ebenen, festen Untergrundes und der geringen Fahrgeschwindigkeit sind einfache Federungssysteme und geringe Federwege sowie Achsverschränkungen ausreichen.

Derartige Schlepper werden zwar in Serie hergestellt, jedoch nicht in großen Stückzahlen, so dass eine hoch automatisierte Fertigung nicht wirtschaftlich ist. Zusätzlich bestimmt bei derartigen Schleppern der Kunde über wesentliche Details des Schleppers, insbesondere die verwendete Antriebsart (z. B. Verbrennungsmotor oder Elektroantrieb), und auch innerhalb einer Antriebsart über das konkret zu verwendende Aggregat, also bei Verbrennungsmotoren über Hersteller und Motortyp, der einzubauen ist, sowie teilweise über weitere Details.

Wegen des ohnehin benötigten hohen Eigengewichts der Schlepper und auch stückzahlbedingt werden keine selbsttragenden Karosserien aus Pressteilen, sondern in der Regel Schweißkonstruktionen aus dicken, schweren Stahlplatten und Stahlprofilen verwendet. Wegen der starken Unterscheidungen zwischen den einzelnen herzustellenden Fahrzeugen aufgrund der kundenspezifischen Abweichungen wurde bisher jeweils eine Einzelfertigung durchgeführt, bei der ausgehend von der horizontal in Brusthöhe positionierten Bodengruppe nacheinander alle Teile einzeln in der notwendigen Montagereihenfolge montiert wurden, also einzelne Längstraversen zur Aufnahme von Vorderachse und Hinterachse an der Bodengruppe verschraubt oder verschweißt wurden, daran die Federn, meist Blattfedern, befestigt wurden, an diesen wiederum die Achsen, während von oben her der Motor, insbesondere als Motorgetriebeeinheit, in den Motorraum eingesetzt und verschraubt wurde.

Die einzelnen Längsträger waren dabei entsprechend dem zu verwendenden Motor an spezifischen Stellen der Bodengruppe montiert und besaßen auch eine spezifische Form je nach Lage der Befestigungspunkte an der Motorgetriebeeinheit.

Auf diese Art und Weise mussten eine Vielzahl von verschieden gestalteten, gleich wirkenden Einzelteilen (Längstraversen, Bremsen, Personenkabinen etc.) vorgehalten bzw. erst individuell hergestellt werden, und hinsichtlich des Montageablaufes ergaben sich entsprechend der Kombinationsmöglichkeiten dieser unterschiedlichen Teile eine fast unübersehbare Vielzahl von Abläufen, so dass hoch spezialisiertes Montagepersonal notwendig war, und dennoch sowohl Montagezeit als auch die Fehlermöglichkeiten relativ hoch lagen.

Diese Probleme wurden noch potenziert, wenn grundsätzlich unterschiedliche Fahrzeugformen eines Schleppers angeboten werden sollten, beispielsweise Frontlenker mit Antriebseinheit hinten und angetriebener, jedoch nicht lenkbarer Hinterachse sowie Fronthauber mit Frontmotor und lenkbarer Vorderachse sowie nicht lenkbarer Hinterachse.

Die US-A-3 732 942 offenbart ein Montageverfahren für eine Zugmaschine, bei dem einerseits ein Motor-Fahrschemel bestehend aus einem Hilfsrahmen, einer Antriebseinheit, und einer Achse erstellt wird, und andererseits eine eigenstabile Bodengruppe mit Vorderachse und daran befindlichen Rädern erstellt wird, wobei auf der Oberseite der Bodengruppe eine Personenkabine und auf deren Unterseite eine Federung montiert ist. Abschließend wird der Motor-Fahrschemel an der Unterseite der Bodengruppe sowie an der Federung befestigt. Um den Motor-Fahrschemel von unter her an der Unterseite der Bodengruppe montieren zu können, wird die gesamte Einheit aus Bodengruppe, Federn, Personenkabine um die Vorderachse als Schwenkachse herum angehoben.

Die US 4 585 088 A offenbart einen Lastwagenaufbau umfassend eine eigenstabile Bodengruppe mit blattgefederter Vorderachse und darauf aufgesetzter Personenkabine und eine aus einem Hilfsrahmen, einer Federung, einer Antriebseinheit und Rädern bestehende Teilbaugruppe, die unten an der stabilen Bodengruppe montiert ist.

Die US 3 062 309 A offenbart ein Montageverfahren für ein Transportfahrzeug, bei dem einerseits zunächst ein Motor-Fahrschemel mit Hilfsrahmen, Federn, Achse und Antriebseinheit, und andererseits eine eigenstabile Bodengruppe mit Hinterachse inklusive Rädern und mit darauf befindlicher Personen- und Transportkabine erstellt wird. Abschließend wird der Motor-Fahrschemel von der Unterseite her an der Bodengruppe montiert, wobei vorher die gesamte Einheit aus Bodengruppe, Personen- und Transportkabine um die Hinterachse als Schwenkachse herum nach oben geschwenkt bzw. angehoben werden muss.

Die US 5 156 230 A offenbart ein Montageverfahren für eine Zug- und Transportmaschine, bei dem zunächst die Vorder- und Hinterachsen mit Rädern an einer eigenstabilen Bodengruppe montiert werden, danach eine Antriebseinheit an der Oberseite der Bodengruppe und abschließend eine Personenkabine von oben her an der Bodengruppe montiert wird.

### III. Darstellung der Erfindung

### a) Technische Aufgabe

Es ist die Aufgabe der vorliegenden Erfindung, ein Montageverfahren sowie einen diesbezüglichen Bausatz zu schaffen, bei dem unterschiedliche Schlepperkonfigurationen in einfacher und effizienter Weise und bei reduzierter Montagezeit sowie bei verringerter Gefahr von Montagefehlern realisiert werden können.

### b) Lösung der Aufgabe

Diese Aufgabe wird durch die Merkmale der Ansprüche 1 und 8 gelöst. Vorteilhafte Ausführungsformen ergeben sich aus den Unteransprüchen.

Durch die Herstellung der sehr stabilen und schweren Bodengruppe als Schweißteil, speziell aus massiven Stahlplatten mit senkrecht stehenden Seitenplatten und verbindenden Querplatten, wird der Verwendung als Schlepper sowie der Herstellung im Kleinserienverfahren optimal Rechnung getragen. Durch die Vormontage des Motor-Fahrschemels und dessen Fixierung in der Bodengruppe ist dieser Endmontageschritt relativ einfach durchzuführen, ebenso wie das Anbringen der zweiten Achse mit ihren Federn in der Bodengruppe und das Aufsetzen der Personenkabine.

Durch Ansetzen des komplettierten Motor-Fahrschemels an der Bodengruppe wird diese von der Unterseite her an der Bodengruppe befestigt, so dass bis auf das Aufsetzen der Personenkabine, und somit der überwiegende Teil der Montagearbeiten, von der Unterseite her durchgeführt werden können, und deshalb in einer für die Montage von der Unterseite her optimierten Lage der Bodengruppe, nämlich auf die Seite gekippt oder um 180° auf den Rücken gelegt.

Auch alle notwendigen weiteren Komplettierungsmaßnahmen, nämlich Installation der Beleuchtung, Verlegung von Kraftstoffleitungen, Bremsleitungen, Kabelbaum, Anbringen von Dämmmaterial etc. können in dieser für den Monteur optimal gewählten Montageposition befestigt werden, während das Aufsetzen der Personenkabine erst nach Rückkehr des Schleppers in die Normallage erfolgt.

Während der Motor-Fahrschemel als vormontierte Einheit einschließlich Hilfsrahmen an der Bodengruppe montiert wird, hängt dies bei der anderen anzubringenden Achse primär davon ab, ob dort ein wenigstens U-förmiger und damit in sich stabiler Hilfsrahmen vorhanden ist oder benötigt wird, oder lediglich zwei parallel liegende Längstraversen, an denen die Federn, meist Blattfedern, befestigt werden und daran die Achse.

In letzterem Fall werden diese Längstraversen vorzugsweise als erstes alleine unter der Bodengruppe befestigt, meist verschweißt, und anschließend daran einzeln zunächst die Federn und unter den Federn dann der Achskörper befestigt.

Falls auch an dieser Stelle mit einem vormontierten Fahrschemel gearbeitet werden soll, müssen die Längstraversen zuvor über mindestens eine Quertraverse gegeneinander vorfixiert werden, alleine um die Handhabung der Einheiten beim Montieren der weiteren Komponenten zu erleichtern.

Der Motor-Fahrschemel wird vormontiert, indem zunächst einmal die Längstraversen ausgewählt werden in Abhängigkeit des vorgesehenen Antriebsaggregates. Hierfür stehen vorzugsweise nicht für jedes einzelne Antriebsaggregat andere Längstraversen des Hilfsrahmens zur Verfügung, wohl jedoch mehrere unterschiedliche Längstraversen, die jeweils zur Aufnahme mehrerer verschiedener Antriebsaggregate geeignet sind.

Die Längstraversen sind - in der Seitenansicht des Fahrzeuges betrachtet - meist horizontal und eben ohne Absatz durchgehende Traversen, in der Aufsicht betrachtet dagegen ein- oder mehrfach gekröpft entsprechend der sich ändernden Breite des Antriebsaggregates, z.B. einer Motor-Getriebeeinheit. Die Längstraversen bestehen aus zusammengeschweißten Stücken von Stahlprofilen, insbesondere geschlossenen Rohrprofilen, oder aus massiven Stahlteilen.

Die parallel liegenden, spiegelbildlich zueinander angeordneten Längstraversen werden an einem ihrer freien Enden über eine quer durchgehende Quertraverse verbunden, insbesondere verschweißt, die ihrerseits wieder aus einer Haupttraverse und Endplatten besteht, wobei die Endplatten einerseits mit der Haupttraverse und andererseits mit den freien Enden der Längstraversen verschweißt sind und Bohrungen zum Verschrauben gegenüber der vertikal stehenden Front- oder Heckplatte der Bodengruppe aufweist.

An den gegenüberliegenden Enden laufen die Längstraversen frei aus und weisen Durchgangsbohrungen zum Verschrauben unter der Oberseite der Bodengruppe in deren mittleren Bereich, vorzugsweise unter den Wannen der Bodengruppe für die Unterbringung der Sitze für Fahrer und Beifahrer, auf.

In dem U-förmigen Freiraum des Hilfsrahmens wird die Motor-Getriebeeinheit von der Oberseite des Hilfsrahmens her eingelassen und auf ggf. dort zuvor noch spezifisch für diese Antriebseinheit befestigten Tragelementen, also Traglaschen oder ähnlichem, verschraubt, in der Regel unter Zwischenlage von Dämpfungselementen.

Die Antriebseinheit, bei einem Verbrennungsmotor meist eine Einheit aus Motor und Getriebe oder Motor und Drehmoment-Wandler, befindet sich dabei in der Aufsicht betrachtet zwischen den Längstraversen, und erstreckt sich in der Seitenansicht betrachtet sowohl oberhalb als auch unterhalb der Längstraversen.

Vorher oder nachher oder gleichzeitig, vorzugsweise nachher, wird an dem Hilfsrahmen eine weitere Vormontagegruppe, bestehend aus den Federn, insbesondere Blattfedern und quer über beide Blattfedern vormontierte Achskörper einschließlich der Radnaben von der Unterseite her an den Längstraversen befestigt, wobei sich immer eine Blattfeder unter einer der Längstraversen befindet.

An der Motor-Getriebeeinheit befinden sich bereits vor dem Einsetzen in den Hilfsrahmen des Motor-Fahrschemels alle notwendigen Nebenaggregate wie Anlasser, Lichtmaschine, vorzugsweise jedoch mit Ausnahme des Kühlers, der aus Gründen der zu leichten Beschädigung nachträglich in den Hilfsrahmen eingesetzt, fixiert und mit der Motor-Getriebeeinheit verbunden wird.

Durch diese Vorgehensweise werden insbesondere die Fehlermöglichkeiten bei der Endmontage reduziert:

Beispielsweise steht vorzugsweise an der Bodengruppe nur eine einzige Befestigungsposition für den Motor-Fahrschemel zur Verfügung.

Eine Falschmontage ist dadurch nicht möglich.

Die Auswahl der hierzu passenden anderen Achse und Federn an der anderen Achse ist relativ einfach und wenig fehlerintensiv.

Durch die Vormontage der einzelnen Komponenten an vor allem dem Motor-Fahrschemel wird Zeit gespart, indem der zunächst nackte Hilfsrahmen aufgrund der guten Zugänglichkeit leicht erstellt werden kann, und auch die Befestigung der Komponenten darin mit besserer Zugänglichkeit und damit schneller erfolgt, als beim Einbau direkt in die Bodengruppe.

Vor allem aber werden alle durch die Auswahl des Antriebsaggregates definiert auszuwählenden bzw. zu modifizierenden Teile nur innerhalb dieses Motor-Fahrschemels vorkommen, so dass für die weiteren Montageschritte ab Befestigung des Motor-Fahrschemels in der Bodengruppe keine antriebsspezifischen Überlegungen bei der Montage mehr notwendig sind.

Dadurch ist auch eine Herstellung von Schleppern nach dem Bausatzverfahren leichter möglich, bei der eine überschaubar geringe Zahl von Einzelkomponenten aufgrund ihrer Kombinationsmöglichkeiten dennoch bereits eine hohe Anzahl unterschiedlicher Endlösungen ergibt:

Sofern mittels des Bausatzes nur ein einziger Schleppertyp, beispielsweise ein Fronthauben-Schlepper, erstellt werden soll, ergeben sich Unterschiede nur noch durch die Wahl der zu verwendenden Antriebseinheit.

Ein entsprechender Bausatz umfasst daher einerseits diese mehreren auswählbaren Antriebseinheiten, und in der Regel demzufolge auch mehrere Längstraversen, die in Abhängigkeit der Gestalt der Antriebseinheiten konturiert sind.

In der Regel kommt man dabei mit einer einzigen Quertraverse noch aus, sind die Unterschiede zwischen den Antriebseinheiten hinsichtlich Form und Größe jedoch sehr groß, werden eventuell auch unterschiedliche Formen von Quertraversen zur Verbindung der Längstraversen zu einem Hilfsrahmen für den Motor-Fahrschemel benötigt.

Bei allen anderen Komponenten, insbesondere der Bodengruppe und der Fahrerkabine, kann man mit einer einzigen Variante auskommen. Bei sehr unterschiedlichen Gewichten der Antriebseinheiten sind jedoch eventuell unterschiedlich starke und damit unterschiedlich dimensionierte Federn, insbesondere Blattfedern, notwendig. Hinsichtlich der Antriebsachse und der Passivachse sind möglicherweise unterschiedliche Antriebseinheiten dahingehend notwendig, dass die dort verwendeten Antriebswellen bzw. das Differenzial unterschiedlich stark dimensioniert sein müssen entsprechend der jeweiligen Motorleistung.

Soll der Bausatz jedoch mehrere grundsätzlich verschiedene Schlepper erzeugen können, beispielsweise Fronthauber und Frontlenker, bei denen vor allem der Motor dementsprechend auch an unterschiedlichen Stellen (unter der Fronthaube oder hinter der Personenkabine) untergebracht ist, ist eine größere Anzahl von verschiedenen Einzelteilen notwendig:

Zum einen hängt dies davon ab, welche Achse - relativ zum Unterbringungsort des Motors und relativ zur Fahrtrichtung - angetrieben werden soll: Bei einem Fronthauber sitzt die Antriebseinheit im vordersten Bereich des Fahrzeuges, jedoch mit dem Getriebe auf der Rückseite des Motors angeflanscht und nach hinten weisend, von wo aus in der Regel eine Kardanwelle zur Hinterachse verläuft, die in der Regel als einzige Achse angetrieben wird.

Die Achse unter dem Motor-Fahrschemel, die Vorderachse, ist zwar lenkbar, in aller Regel jedoch nicht angetrieben und daher nicht mit der Motor-Getriebeeinheit wirkverbunden.

Bei Herstellung eines Frontlenkers, also mit Personenkabine unmittelbar an der Front des Fahrzeuges, ist die Motor-Getriebeeinheit dagegen im Heckteil des Schleppers untergebracht. Auch in diesem Fall wird bevorzugt die nicht lenkbare Hinterachse angetrieben.

Aus diesem Grund wird statt der lang bauenden, sich an den Motor anschließenden Getriebeeinheit ein kürzer bauender Drehmoment-Wandler verwendet, dessen Anbindung an die fast darunter positionierte Hinterachse sich einfacher gestaltet.

Natürlich ist auch in diesem Fall ein übliches Getriebe und Weiterleitung mittels Kardanwelle zur anderen Achse, in diesem Fall der Vorderachse zwecks deren Antrieb möglich (Transaxle-Prinzip), jedoch stellt sich dann dort das Problem der Kombination von Lenkung und Antrieb an einer Achse.

Dies lässt sich ggf. dadurch umgehen, dass statt der Vorderachse die Hinterachse lenkbar ausgeführt ist, was jedoch nicht immer erwünscht ist.

Der Bausatz umfasst dementsprechend mehrere Bodengruppen, eine lenkbare und eine nicht lenkbare Achse, sowie eine Antriebsachse und eine Passivachse. Je nach den angestrebten Kombinationsmöglichkeiten kann hierbei immer die ungelenkte Achse die Antriebsachse sein, während die lenkbare Achse die Passivachse ist. Falls alle Kombinationsmöglichkeiten ausgeschöpft werden sollen, ist diese Beschränkung nicht möglich, so dass insgesamt mindestens vier verschiedene Achsen benötigt würden.

Bei der Personenkabine wird darauf geachtet, dass sowohl beim Frontlenker als auch beim Fronthauber wenn möglich ein und dieselbe Personenkabine verwendet werden kann, oder zumindest zwei Personenkabinen, die in möglichst vielen Einzelteilen übereinstimmen, die zur Herstellung der Personenkabine als vorgefertigte Baugruppe benötigt werden.

Dies können die getrennten A-Säulen und B-Säulen oder stattdessen verwendete umlaufende Seitenrahmen der Personenkabine sein, die in die Kabine einzusetzenden seitlichen Türen, die Frontscheibe, Heckscheibe und/oder das Dachelement.

Mittels eines solchen Bausatzes können somit durch eine vorzuhaltende relativ geringe Anzahl von verschiedenen Einzelteilen eine hohe Anzahl an verschiedenen Varianten von Fahrzeugen hergestellt werden.

### c) Ausführungsbeispiele

Ausführungsformen gemäß der Erfindung sind im Folgenden beispielhaft näher beschrieben. Es zeigen:
- Fig. 1:: die Bodengruppe,
- Fig. 2:: die Entstehung des Motor-Fahrschemels,
- Fig. 3:: den Beginn der Endmontage lediglich in der Seitenansicht,
- Fig. 4:: das Ende der Endmontage lediglich in der Seitenansicht, und
- Fig. 5:: die fertigen Fahrzeuge in derselben Ansicht.

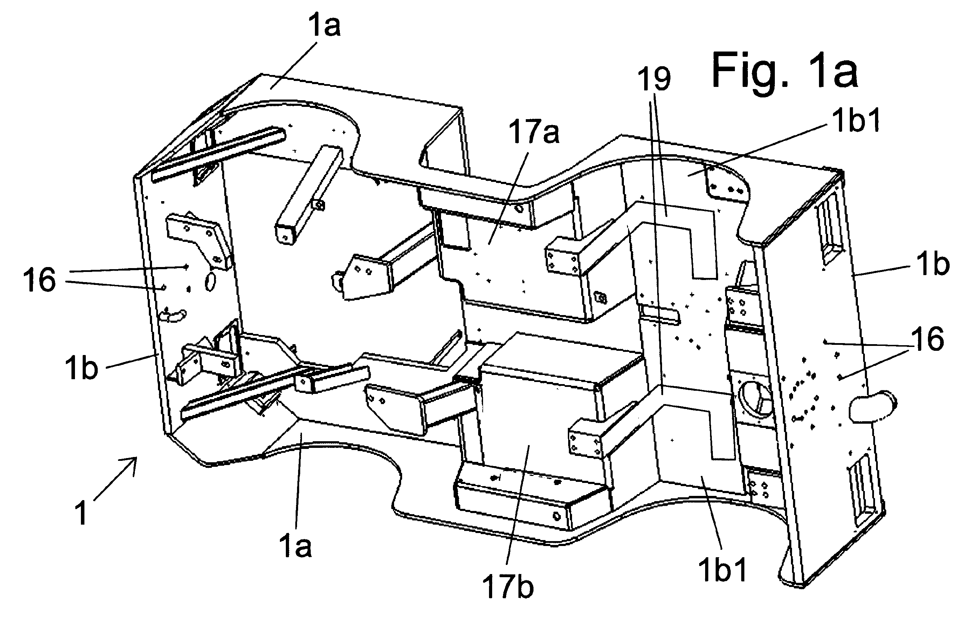

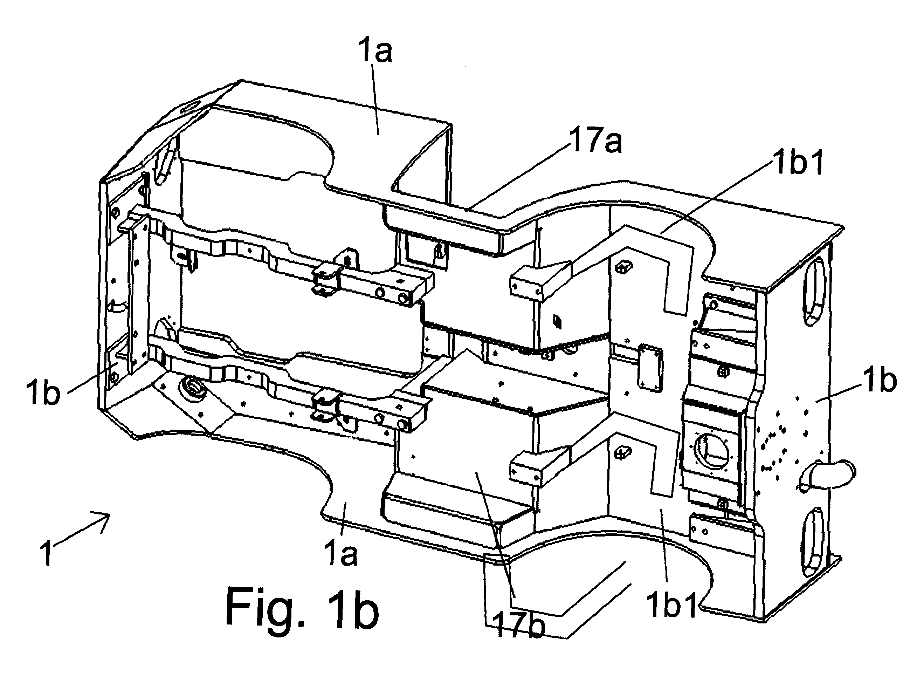

Die Figuren 1, 2 und 3a zeigen die Entstehung eines Fronthauben-Schleppers mit Frontmotor und Heckantrieb.

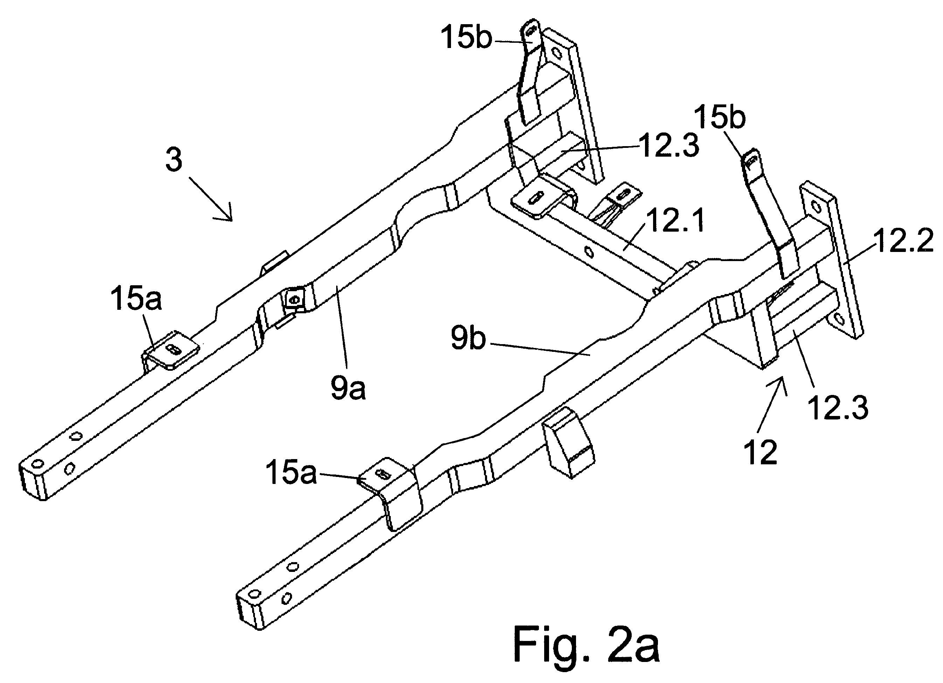

Figur 1a zeigt die Bodengruppe 1 schräg von unten, während in Figur 1b in der Bodengruppe bereits der Hilfsrahmen 3, welcher die Antriebseinheit 6 trägt, in der Bodengruppe 1 montiert dargestellt ist, was jedoch lediglich dazu dient, die Lage des Hilfsrahmens 3 in der Bodengruppe 1 besser darstellen zu können, da nicht der Hilfsrahmen 3 alleine, sondern der komplette Motor-Fahrschemel 2, wie anhand der Figuren 2a bis 2c dargestellt, unter der Bodengruppe 1 montiert wird.

In Figur 1 ist zu erkennen, dass die Bodengruppe 1 aus im Wesentlichen ebenen, miteinander verschweißten Stahlplatten hergestellt ist, insbesondere den bei einem fertigen Fahrzeug vertikal stehenden, in Längsrichtung im Wesentlichen vom vorderen bis zum hinteren Ende durchgehenden Seitenplatten 1a, die durch dazwischen eingeschweißte Querplatten 1 b auf Abstand gehalten werden.

Während zwischen den Seitenplatten 1a in diesem Fall im vorderen Bereich ein Freiraum für die Antriebseinheit 6 verbleibt, ist der hintere Bereich, also ab der Position für die Personenkabine, auch durch horizontale Querplatten z.B. 1 b1 verbunden, wodurch sich im hinteren Bereich ein durchgehender, geschlossener Fahrzeugboden 1 b1 ergibt, der insbesondere im Bereich der Personenkabine 8 links und rechts abgesenkte Bereiche (Wannen 17) für Fahrer und Beifahrer aufweist, während der Fahrzeugboden in der Mitte erhöht bleibt, vor allem um Platz für das Getriebe 6b der Antriebseinheit 6 und die Kardanwelle zu schaffen.

Die Seitenplatten 1a stehen dabei so weit zueinander beabstandet, dass sie die Außenflächen des Schleppers bilden und die Bodengruppe 1 damit gleichzeitig als Kotflügel dient, in dem sich beim fertigen Fahrzeug die Räder 14 noch innerhalb der Seitenplatten 1a befinden, weshalb in den Seitenplatten 1a auch entsprechende Ausschnitte für die Räder vorhanden sein müssen.

In Figur 1a sind ferner im hinteren Bereich zueinander beabstandet, jedoch vom äußeren Rand der Bodengruppe 1a nach innen versetzt, zwei analoge Längstraversen 19 zu erkennen, die aus Stahlprofilen bestehen und an der Unterseite der Bodengruppe längs verlaufend befestigt, insbesondere verschweißt, sind.

Diese erstrecken sich von der Unterseite der abgesenkten Wannen 17a, b in der Bodengruppe für den Fahrersitz und Beifahrersitz ansteigend entlang der Unterseite der Bodengruppe unter dem erhöhten Heckbereich und ggf. wieder entlang der hinteren Querplatte nach unten, und dienen dem späteren Verschrauben der Hinterachse.

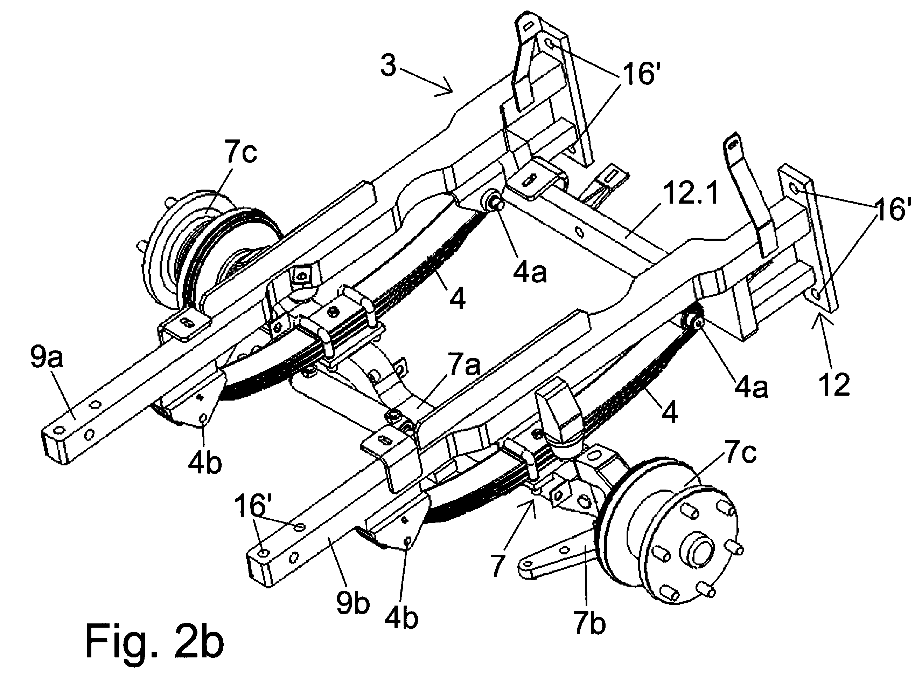

Die Figuren 2 zeigen den Aufbau des Motor-Fahrschemels 2:

Zunächst wird gemäß Figur 2a der Hilfsrahmen 3 erstellt. Dieser besteht aus zwei Längstraversen 9a, b, die wiederum aus Stahlprofilen hergestellt sind und in der Aufsicht betrachtet eine zumindest teilweise an die Form der aufzunehmenden Antriebseinheit 6 angepasste Grob-Formgebung besitzen, in der Seitenansicht betrachtet vorzugsweise jedoch horizontal eben durchgehen.

Die beiden Längstraversen 9a, b sind spiegelbildlich zueinander angeordnet in einem Abstand, der geringer ist als der Querabstand der Seitenplatten 1a der Bodengruppe 1, und sind an einem Ende mittels einer Quertraverse 12 verbunden, also verschweißt oder verschraubt. Die Quertraverse 12 selbst ist wiederum ein aus mehreren Einzelteilen, insbesondere Stahlplatten und Stahlprofilen, hergestelltes Schweißteil, bestehend insbesondere aus einer von den freien Enden der Längstraversen 9 zurückversetzt verlaufenden Haupttraverse 12.1 sowie davon beabstandeten, vertikal aufragenden Endplatten 12.2, die mit der Haupttraverse 12.1 über Abstandshalter 12.3 verbunden sind. Die Endplatten 12.2 (nur eine ist dargestellt) erstrecken sich vor den stirnseitigen Enden der Längstraversen 9, mit denen sie fest verbunden, insbesondere verschweißt, werden, hinaus nach oben sowie über den Abstandshalter 12.3 hinaus nach unten und besitzen insbesondere in diesem Überstand Befestigungsbohrungen 16' zum Verschrauben gegen die Innenseite der vertikal stehenden vorderen Querplatte 1 b der Bodengruppe 1.

Die hinteren freien Enden der Längstraversen 9a, b sind nicht über eine Quertraverse miteinander verbunden, sondern werden bei der Montage des fertig gestellten Motor-Fahrschemels 2 über Befestigungsbohrungen 16' auf der Unterseite jeweils einer der Wannen 17a, b der Bodengruppe 1a direkt verschraubt.

Während der Vormontage des Motor-Fahrschemels 2 werden diese Enden einerseits durch das feste Fixieren mit der Quertraverse 12 nicht nur am absoluten Ende, sondern auch davon zurückversetzt mit deren Haupttraverse 12.1 in Parallellage zueinander gehalten. Da die Längstraversen 9a, b etwa auf Höhe der Haupttraverse 12.1 in der Aufsicht betrachtet nach außen gekröpft sind und am freien Ende einen größeren Abstand zueinander aufweisen, wird in diesem Endbereich ein größerer Abstand zum Einbringen des sehr breiten, vertikal stehenden Kühlers 6c geschaffen.

Wie in Figur 2b zu erkennen, wird quer unter den Hilfsrahmen 3, genauer unter dessen Längstraversen 9a, b die Achse geschraubt, in diesem Fall eine zwar lenkbare, aber nicht angetriebene Passivachse 7 mit starrem Achskörper 7a, einschließlich ihrer Federung, bestehend aus längsverlaufenden Blattfedern 4.

Zu diesem Zweck werden als Vormontagegruppe zunächst oberhalb der Passivachse 7, die neben dem Achskörper auch bereits die Achsschenkel 4b und Radnaben 4c aufweist, die Blattfedern 4 verschraubt. Die so erstellte Vormontagegruppe wird durch Befestigen der Blattfederenden 4a, b unter den Längstraversen 9a, b mit dem Hilfsrahmen 3 verschraubt. Im Gegensatz dazu wird die Antriebseinheit 6, bestehend aus zusammengeflanschtem Motor 6a, Getriebe 6b sowie möglichst allen Nebenaggregaten wie Anlasser, Lichtmaschine etc. von oben her in den Hilfsrahmen 3 eingesetzt, nachdem an den Längstraversen 9a, b eventuell noch zusätzliche, auf die Antriebseinheit 6 abgestimmte Tragelemente 15a, b, wie Traglaschen, Abstandshalter etc. fixiert wurden.

Die Antriebseinheit 6 befindet sich im montierten Zustand längsverlaufend in der Aufsicht betrachtet zwischen den Längstraversen 9 und in der Seitenansicht auf Höhe der Längstraversen 9, also sich sowohl oberhalb als auch unterhalb der Längstraversen 9 erstreckend, meist im leichten Winkel schräg zur Horizontalen, also der Richtung der Längstraversen 9, verlaufend.

Trotz der aus den Figuren 2a und 2b ersichtlichen Abfolge kann die Antriebseinheit 6 auch vor der Anbringung von Achse 7 und Federn 4 in den Hilfsrahmen 3 eingesetzt werden.

Der Kühler 6c ist in der Regel nicht Bestandteil der Antriebseinheit 6 beim Einsetzen in den Hilfsrahmen 3, sondern wird anschließend separat am Hilfsrahmen 3 montiert und mit der restlichen Antriebseinheit 6 verbunden.

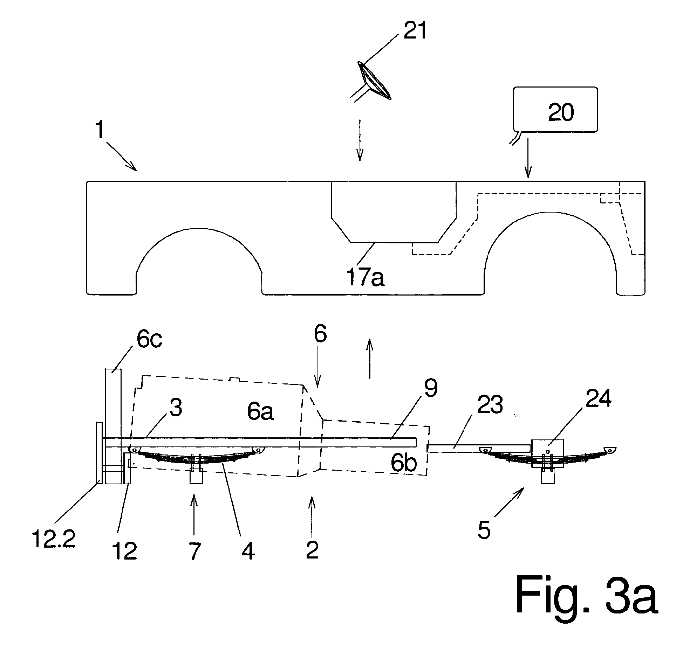

Nun kann die Endmontage wie in Figur 3a dargestellt, stattfinden.

Dazu wird der komplett vormontierte Motor-Fahrschemel 2 von der Unterseite der Bodengruppe 1 her in diese eingesetzt und der Hilfsrahmen 3 an der Bodengruppe 1 verschraubt, wie separat für den Hilfsrahmen 3 aus Gründen der Übersichtlichkeit in Figur 1b dargestellt. Ebenso wird, in der Regel anschließend, die Hinterachse, in diesem Fall eine nicht lenkbare Antriebsachse 5, einschließlich des Getriebes an den hinteren Längstraversen 19 ebenfalls von der Unterseite her an der Bodengruppe 1 verschraubt, und dabei auch die Kardanwelle zwischen dem Getriebe 6b der Antriebseinheit 6 und dem Differenzial montiert.

Die Bodengruppe 1 ist dabei in einer Schwenkvorrichtung aufgenommen, die es ermöglicht, die Bodengruppe 1 zur besseren Zugänglichkeit um ihre Längsrichtung 10 um etwa 90° auf die Seite zu kippen und zu halten, wie in Fig. 1a, b dargestellt, und in dieser Lage den Motor-Fahrschemel 2 als Vorderachse und die Antriebsachse 5 als Hinterachse leichter montieren zu können, indem die auf die Seite gekippte Bodengruppe 1 etwa auf Brusthöhe des Monteurs gehalten wird.

Die nicht dargestellte Montagevorrichtung ist zu diesem Zweck einerseits höhenverstellbar, und andererseits auch mittels Rädern auf dem Untergrund verfahrbar, um auch während der Montage die gesamte Einheit weiterschieben zu können.

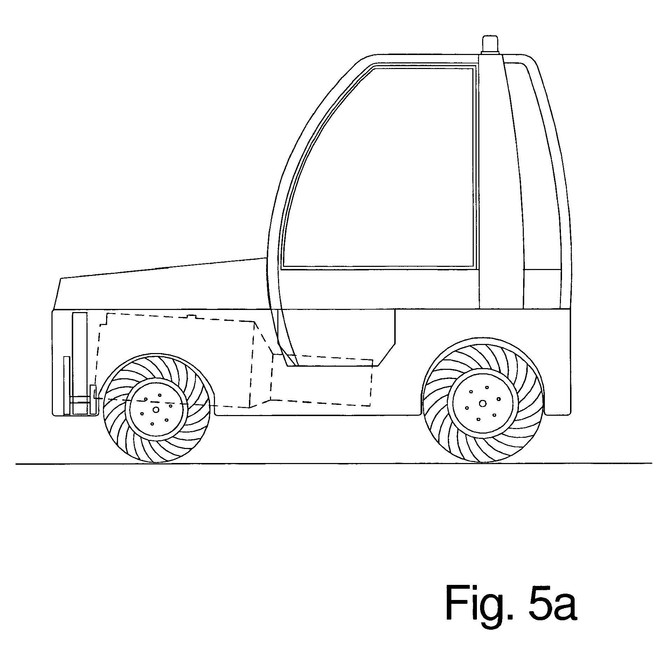

Anschließend wird - beispielsweise nach Montage weiterer notwendiger und sowohl von der Oberseite als auch von der Unterseite her einzusetzender und zu verschraubender Komponenten, beispielsweise der Lenkung und dem Kraftstofftank, der Fahrzeugelektrik, Beleuchtung, Kraftstoffleitungen, Bremsleitungen, Kabelbaum, so dass zuletzt das in Figur 5a nochmals in Prinzipskizze dargestellte Fahrzeug entsteht - mittels der Montagevorrichtung das teilkomplettierte Fahrzeug wieder in die Normallage horizontal geschwenkt, und auch die Räder 14 an den Achsen vorzugsweise erst jetzt befestigt.

Zuletzt wird die Personenkabine 8, wie separat in Fig. 2d dargestellt, vorzugsweise bereits einschließlich des darin vormontierten Armaturenbretts und aller Instrumente, von oben auf die Bodengruppe 1 aufgesetzt und montiert, vorzugsweise nachdem das teilmontierte Fahrzeug bereits der Montagevorrichtung entnommen und mit den eigenen Rädern auf den Boden gestellt wurde.

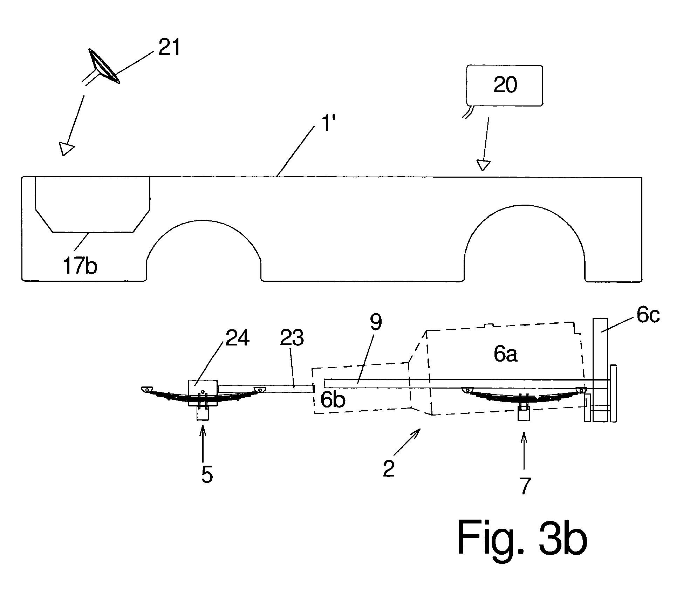

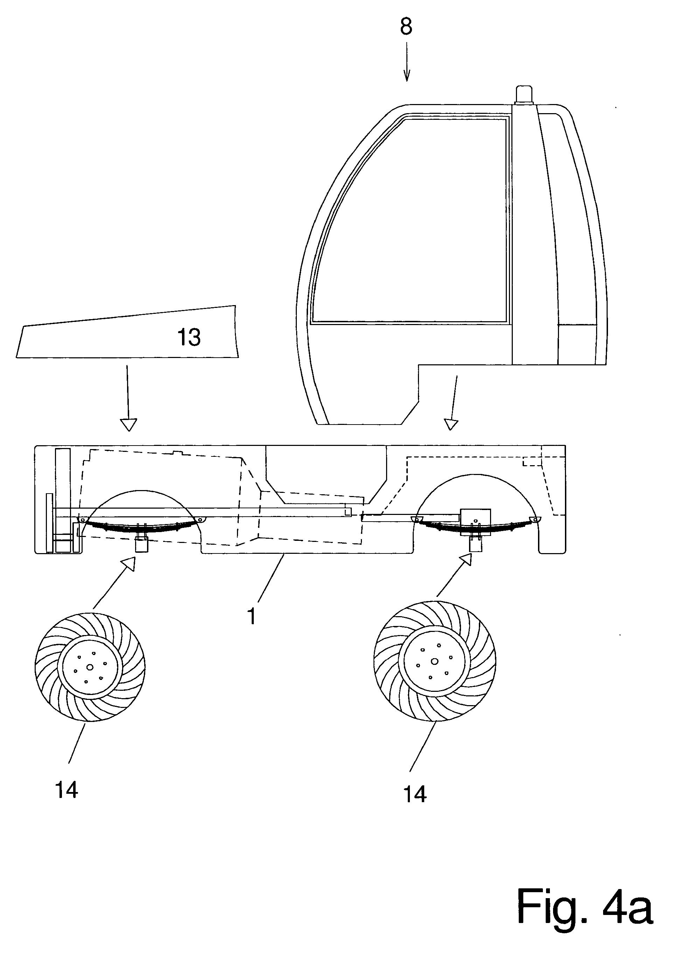

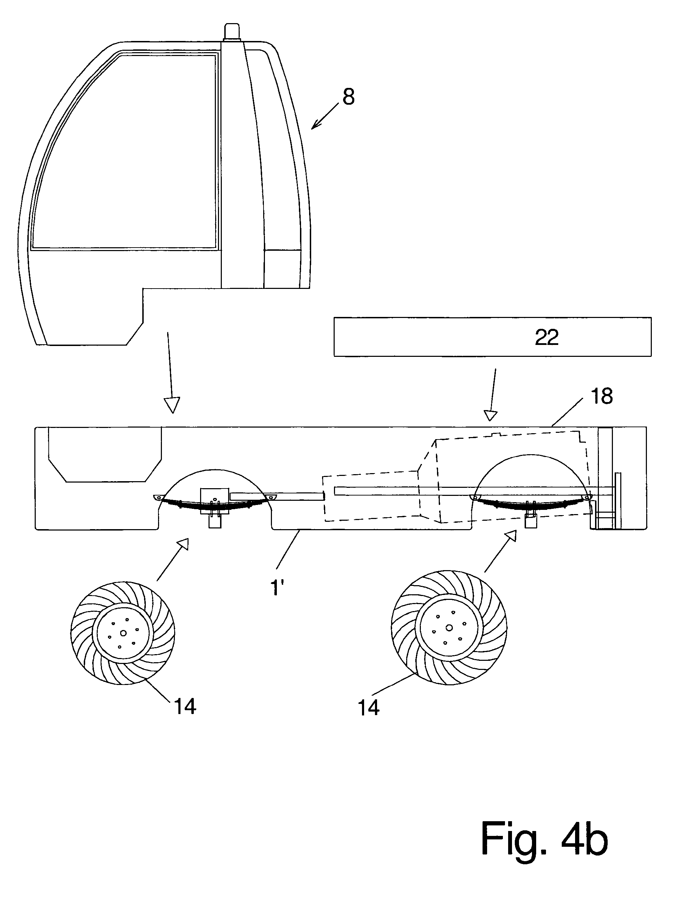

Die Figuren 3b und 4b zeigen in analoger Darstellungsweise die Endmontage bei einem Frontlenker. In diesem Fall wird der Motor-Fahrschemel 2 in der Aufsicht betrachtet um 180° gedreht, also beispielsweise mit dem Kühler nach hinten und dem Getriebe nach vorn weisend, im Heckteil der entsprechenden Bodengruppe 1' montiert, während im Frontteil eine lenkbare, diesmal jedoch lenkbare Achse 5' montiert ist.

Dabei wird versucht, die gleiche Personenkabine 8 wie bei dem Fronthauber zu verwenden, und falls aufgrund der anderen Dimensionierung eine andere Personenkabine 8' notwendig ist, bei den beiden Kabinen 8, 8' möglichst viele Einzelteile gemeinsam und möglichst identisch verwenden zu können, beispielsweise A-Säule, B-Säule oder einen von der A-Säule zur B-Säule durchgehenden Seitenrahmen, Türen, Frontscheibe, Dach, Heckscheibe usw..

Anstelle einer Motorhaube 13 wie beim Fronthauber der Figur 3a wird der nun heckseitige Motorraum abgedeckt durch eine Ladefläche 19, die ebenfalls abnehmbar oder hochklappbar ist um die Zugänglichkeit zur Antriebseinheit zu gewährleisten.

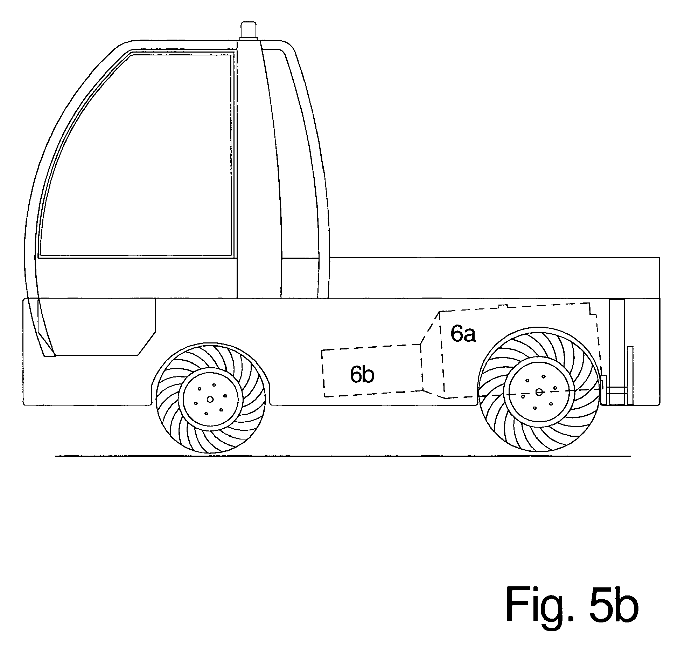

Den Endzustand des Frontlenkers zeigt Figur 5b.

### BEZUGSZEICHENLISTE

- 1: Bodengruppe
- 1a: Seitenplatte
- 1 b: Querplatte
- 1b1: Fahrzeugboden
- 2: Motor-Fahrschemel
- 3: Hilfsrahmen
- 4, 4': Feder
- 4a, b: Federende
- 5: Antriebsachse
- 6: Antriebseinheit
- 6a: Motor
- 6b: Getriebe
- 6c: Kühler
- 7: Passivachse
- 7a: Achskörper
- 7b: Achsschenkel
- 7c: Radnaben
- 8, 8': Personenkabine
- 9: Längstraverse
- 10: Längsrichtung
- 11: Querrichtung
- 12: Quertraverse
- 12.1: Haupttraverse
- 12.2: Endplatte
- 12.3: Abstandshalter
- 13: Motorhaube
- 14: Rad
- 15: Tragelement
- 16, 16': Befestigungsbohrungen
- 17a, b: Wanne
- 18: Ladefläche
- 19: Längstraverse
- 20: Tank
- 21: Lenkrad
- 22: Bordwand
- 23: Kardanwelle
- 24: Differenetial

## Patentansprüche

1. Montageverfahren für Schlepper, insbesondere blattgefederte Schlepper,
**umfassend die folgenden Schritte:**
a) Erstellen eines Motor-Fahrschemels (2) mit Hilfsrahmen (3), Federn (4), Achse (5 bzw. 7) und Antriebseinheit (6),
b) Auswählen einer einzelnen Bodengruppe (1, 1') aus einer Menge bestehend aus wenigstens zwei verschiedenen Bodengruppen (1, 1'), wobei jede Bodengruppe (1, 1') der Menge von Bodengruppen (1, 1') die Stabilität und das hohe Eigengewicht des Schleppers zur Verfügung stellt und als Schweißteil für unterschiedliche Fahrzeugformen, insbesondere Fronthauber und Frontlenker, gebildet ist, wobei die Bodengruppen (1, 1') in Abstimmung mit dem Motor-Fahrschemel (2) so dimensioniert sind, dass der Motor-Fahrschemel (2) wahlweise in der einen Bodengruppe (1) als Vorderachsschemel und in der anderen Bodengruppe (1') als Hinterachsschemel eingesetzt werden kann,
c) Einbringen des Motor-Fahrschemels (2) von der Unterseite her in die ausgewählte Bodengruppe (1, 1') und Verschrauben mit dieser,
d) Einbringen einer weiteren Achse (5 bzw. 7) mit Federn (4') von der Unterseite her am anderen Ende in die Bodengruppe (1, 1') und Verschrauben mit dieser, und
e) Aufsetzen einer Personenkabine (8) auf die Oberseite des ausgewählten Bodengruppe (1, 1') erst nach Durchführung aller von der Unterseite her durchzuführenden Montagearbeiten an der Bodengruppe (1, 1') und ggf. Montage der Räder (14).

2. Montageverfahren nach Anspruch 1,
**dadurch gekennzeichnet, dass**
alle von der Unterseite her durchgeführte Montagen an der Bodengruppe (1) entweder bei auf die Seite gekippter Bodengruppe (1), die in Brusthöhe des Monteurs gehalten ist, durchgeführt werden oder bei um 180° um die Längsrichtung (10) auf die Oberseite gelegter Bodengruppe (1), und/oder zur Montage der Personenkabine (8) die Bodengruppe (1, 1') auf den Untergrund gestellt wird.

3. Montageverfahren nach einem der vorhergehenden Ansprüche,
**dadurch gekennzeichnet, dass**
- die Bodengruppe (1) primär zusammengesetzt ist aus massiven, im Wesentlichen vertikal stehenden Seitenplatten (1a) sowie diese verbindenden Querplatten (1b), welche insbesondere abseits des Motorraumes auch horizontal liegend als durchgehender Fahrzeugboden (1b1) vorhanden sind, und/oder insbesondere
- unter dem Fahrzeugboden (1b1) Längstraversen (19) geschweißt oder geschraubt werden zur Aufnahme der weiteren Achse (5 bzw. 7) und deren Federn (4'), insbesondere von der Seite zurückversetzt nach innen.

4. Montageverfahren nach einem der vorhergehenden Ansprüche,
**dadurch gekennzeichnet, dass**
- der Motor-Fahrschemel (2) erstellt wird durch Verbinden, insbesondere Verschweißen, von entsprechend der Antriebseinheit (6) ausgewählten Längstraversen (9a, b) mit wenigstens einer Quertraverse (12), insbesondere am Ende der Längsträger (9a, b) und
- Verschrauben von Federn (4a, b), weiterer Achse (5 bzw. 7) und Antriebseinheit (6) am Hilfsrahmen (3).

5. Montageverfahren nach einem der vorhergehenden Ansprüche,
**dadurch gekennzeichnet, dass**
- die Achse (5 bzw. 7) zuerst mit den Federn (4a, b) verbunden wird zu einer Vormontagegruppe, die anschließend am Hilfsrahmen (3) verschraubt wird, insbesondere vor dem Einsetzen der Antriebseinheit (6) in den Hilfsrahmen (3), und/ oder insbesondere
- vor dem Einsetzen der Antriebseinheit (6) am Hilfsrahmen (3), insbesondere an den Längstraversen (9a, b), auf die jeweilige Antriebseinheit (6) abgestimmte Tragelemente (15a, b) verschraubt werden.

6. Montageverfahren nach einem der vorhergehenden Ansprüche,
**dadurch gekennzeichnet, dass**
- die Längstraversen (9a, b und/oder 19a, b) aus Profilen, insbesondere geschlossenen Rohrprofilen, erstellt sind, und/oder insbesondere
- die Federn (4a, b) längsverlaufende Blattfedern sind, die auf der Unterseite der Längstraversen (9a, b) angeordnet sind.

7. Montageverfahren nach einem der vorhergehenden Ansprüche,
**dadurch gekennzeichnet, dass**
- die Achse (5 bzw. 7) eine Starrachse ist, insbesondere mit an den Enden angeordneten, insbesondere lenkbaren Radnaben (7c), und/oder insbesondere
- die Antriebseinheit (6) als Einheit bestehend aus Motor (6a), Getriebe (6b) und insbesondere Nebenaggregaten wie Anlasser, Lichtmaschine, insbesondere ausgenommen des Kühlers, in den Hilfsrahmen (3) eingesetzt und verschraubt wird und insbesondere anschließend erst der Kühler (6c) separat im Hilfsrahmen (3) befestigt und mit der übrigen Antriebseinheit (6) verbunden wird.

8. Schlepperbausatz mit
- wenigstens zwei stabilen Bodengruppenteilen (1, 1') für unterschiedliche Fahrzeugformen, insbesondere Fronthauber und Frontlenker,
- wenigstens einer Personenkabine (8), die auf der Oberseite der Bodengruppenteile (1, 1') anordenbar ist,
- wenigstens zwei Antriebseinheiten (6), die sich in Bezug auf die Antriebsart, insbesondere Verbrennungsmotor oder Elektroantrieb, und/oder in Bezug auf Hersteller und Motortyp unterscheiden,
- wenigstens zwei Paare von Längstraversen (9), die in Abhängigkeit der unterschiedlichen Gestalt der Antriebseinheiten (6,) konstruiert sind,
- wenigstens einer Quertraverse (12),
- wenigstens einer Antriebsachse (5), und
- wenigstens einer Passivachse (7), **wobei**
- jeweils eine Quertraverse (12), jeweils zwei Längstraversen (9), eine Antriebseinheit (6) und wahlweise eine Antriebsachse (5) oder eine Passivachse (7) zur Bildung eines Motor-Fahrschemels (2) miteinander verbindbar sind,
- der Motor-Fahrschemel (2) als eine Vormontageeinheit an der Unterseite der Bodengruppenteile (1, 1') befestigbar ist und
- die Bodengruppen (1, 1') in Abstimmung mit dem Motor-Fahrschemel (2) so dimensioniert sind, dass der Motor-Fahrschemel (2) wahlweise in der einen Bodengruppe (1) als Vorderachsschemel und in der anderen Bodengruppe (1') als Hinterachsschemel eingesetzt werden kann.

9. Schlepperbausatz nach Anspruch 8,
**dadurch gekennzeichnet, dass**
- die Bodengruppe (1) mehrere alternative Befestigungspunkte, insbesondere Befestigungsbohrungen (16) zum Befestigen eines Motor-Fahrschemels (2), der Längstraversen (9) sowie wenigstens eine Quertraverse (12) umfasst, aufweist, und/oder insbesondere
- der Bausatz mehrere Quertraversen (12a, b) umfasst, und/oder insbesondere
- der Bausatz mehrere Federn (4, 4') einschließlich angepasster Tragelemente (15) gegenüber dem Hilfsrahmen (3) umfasst, und/oder insbesondere
- der Bausatz mehrere Antriebsachsen (5), insbesondere eine lenkbare Antriebsachse (5a) und eine nicht lenkbare Antriebsachse (5b), umfasst.

10. Schlepperbausatz nach einem der vorhergehenden Ansprüche,
**dadurch gekennzeichnet, dass**
- der Bausatz mehrere Bodengruppen (1, 1') für unterschiedliche Fahrzeugformen, insbesondere Fronthauber und Frontlenker, umfasst, und/oder insbesondere
- der Bausatz unterschiedliche Passivachsen (7, 7'), insbesondere als lenkbare oder nicht lenkbare Passivachse, umfasst, und/oder insbesondere
- der Bausatz nur eine Personenkabine (8) umfasst oder mehrere Personenkabinen (8, 8'), die in einer Reihe von Einzelteilen, insbesondere A-Säule, B-Säule bzw. Seitenrahmen, Türen, Frontscheibe, Dach, übereinstimmen.

11. Schlepperbausatz nach einem der vorhergehenden Ansprüche,
**dadurch gekennzeichnet, dass**
- die Bodengruppen (1, 1') in Abstimmung mit dem Motor-Fahrschemel (2) so dimensioniert sind, dass der Motor-Fahrschemel (2) wahlweise in der einen Bodengruppe (1) als Vorderachsschemel und in der anderen Bodengruppe (1') als Hinterachsschemel eingesetzt werden kann, und/oder insbesondere
- die eine Personenkabine (8) bzw. die unterschiedlichen Personenkabinen (8, 8') in Abstimmung mit den Bodengruppen (1, 1') so dimensioniert sind, dass sie zusammen mit der einen Bodengruppe (1) ein Fronthauber-Fahrzeug und zusammen mit der anderen Bodengruppe (1') ein Frontlenker-Fahrzeug ergeben.

## Claims

1. An assembly method for tractors, in particular for tractors with leaf springs comprising the following steps:
(a) producing an engine sub frame (2) with an auxiliary frame (3), springs (4) axle (5; 7) and drive unit (6),
(b) selecting one particular floor assembly (1, 1') from a plurality comprised of at least 2 different floor assemblies (1, 1'), wherein each floor assembly (1, 1') out of the plurality of floor assemblies (1, 1') provides the stability and the high weight of the tractor and is configured as a welded component for different vehicle shapes, in particular for vehicles with a front hood and vehicles with front steering, wherein the floor assemblies (1, 1') are sized according to the engine sub frame (2), so that the engine sub frame (2) can be alternatively used in the one floor assembly (1) as a front axle sub frame and in the other floor assembly (1') as a rear axle sub frame.
(c) inserting the engine sub frame (2) from the bottom into the selected floor assembly (1, 1') and bolting together therewith,
(d) inserting another axle (5; 7) with springs (4') from the bottom side at the other end into the floor assembly (1, 1') and bolting together therewith, and
(e) placing a personnel cab (8) onto the top of the selected floor assembly (1, 1') only after performing all assembly steps to be performed at the floor assembly (1, 1') from the bottom side and possibly after assembly of the wheels (14).

2. An assembly method according to claim 1, wherein all assembly steps at the floor assembly (1), which are performed from the bottom, are either performed with the floor assembly (1) tilted sideways and supported at chest level of the assembly technician, or with the floor assembly tilted by 180° about the longitudinal direction (10) and placed on its top side and/or the floor assembly (1, 1') is placed onto the ground for mounting the personnel cab (8).

3. An assembly method according to one of the preceding claims, wherein
- the floor assembly is primarily comprised of solid substantially vertically disposed side plates (1a) and transversal plates (1b) connecting them, which are provided in particular distant from the engine compartment also horizontally disposed as a continuous vehicle floor (1b1) and/or in particular
- longitudinal beams (19) are welded or bolted below the vehicle floor (1 b1) in order to receive the additional axle (5; 7) and its springs (4'), in particular from the side recessed inward.

4. An assembly method according to one of the preceding claims, wherein
- the engine sub frame (2) is fabricated by connecting, in particular welding, longitudinal beams (9a, b) selected according to the drive unit (6) with at least one transversal beam (12), in particular at the end of the longitudinal beams (9a, b); and
- bolting the springs (4a, b), the additional axle (5; 7) and the drive unit (6) to the auxiliary frame (3).

5. An assembly method according to one of the preceding claims, wherein the axle (5; 7) is first connected with the springs (4a, b) to form a subassembly, which is thereafter bolted to the auxiliary frame (3) in particular before inserting the drive unit (6) into the auxiliary frame (3) and/or in particular
- before inserting the drive unit (6), support elements (15a, b) which are adjusted to the respective drive unit (6), are bolted to the auxiliary frame (3), in particular to the longitudinal beams (9a, b).

6. An assembly method according to one of the preceding claims, wherein the longitudinal beams (9a, b and/or 19a, b) are fabricated from profiles, in particular from closed tubular profiles and/or in particular
- the springs (4a, b) are longitudinally extending leaf springs which are disposed on the bottom side of the longitudinal beams (9a, b).

7. An assembly method according to one of the preceding claims, wherein the axle (5; 7) is a rigid axle, in particular with wheel hubs (7c), which are steerable in particular, disposed at the ends and/or in particular
- the drive unit which is a unit comprised of engine (6a), transmission (6b) and in particular auxiliary units like starter, alternator, in particular excluding the radiator, is inserted into the auxiliary frame (3) and bolted down and in particular only thereafter the radiator (6c) is separately mounted to the auxiliary frame (3) and connected with the rest of the drive unit (6).

8. A tractor kit comprising:
- at least two stable floor assembly components (1, 1') for different vehicle shapes, in particular vehicles with a front hood and front steering,
- at least one personnel cab (8) which can be disposed on the top side of the floor assembly components (1, 1'),
- at least two drive units (6), which are different with respect to the drive method, in particular an internal combustion engine or an electric drive and /or different with respect to engine manufacturer and engine type,
- at least two pairs of longitudinal beams (9) which are configured depending on the different configuration of the drive unit,
- at least one transversal beam (12),
- at least one drive axle (5); and
- at least one passive axle (7), wherein
- one respective transversal beam (12), two respective longitudinal beams (9), one drive unit (6) and optionally one drive axle (5) or one passive axle (7) for forming an engine sub frame (2) can be connected to one another
- the engine sub frame (2) can be mounted as a preassembled unit at the bottom of the floor assembly components (1, 1'); and
- the floor assemblies (1, 1') are sized according to the engine sub frame (2), so that the engine sub frame (2) can be used optionally in the one floor assembly (1) as a front axle sub frame and in the other floor assembly as a rear axle sub frame.

9. A tractor kit according to claim 8, wherein
- the floor assembly (1) comprises alternative mounting points, in particular mounting bore holes (16) for mounting an engine sub frame (2), the longitudinal beams (9) and at least one transversal beam (12) and/or in particular
- the kit comprises plural transversal beams (12a, b), and or in particular
- the kit comprises plural springs (4, 4') including adapted support elements (15) with respect to the auxiliary frame (3), and/or in particular
- the kit comprises plural drive axles (5), in particular a steerable drive axle (5a) and a non steerable drive axle (5b).

10. A tractor kit according to one of the preceding claims, wherein
- the kit comprises plural floor assemblies (1, 1') for different vehicle shapes, in particular for vehicles with a front hood and front steering and/or in particular
- the kit comprises different passive axles (7, 7'), in particular as steerable or non steerable passive axles, and /or in particular
- the kit comprises only one personnel cab (8) or plural personnel cabs (8, 8') which use a number of identical components, in particular A- column, B- column or side frames, doors, wind screen, roof.

11. A tractor kit according to one of the preceding claims, wherein
- the floor assemblies (1, 1') are sized according to the engine sub frame (2), so that the engine sub frame (2) can be used optionally in the one floor assembly (1) as a front axle sub frame and in the other floor assembly (1') as a rear axle sub frame, and/or in particular the one personnel cab (8) or the different personnel cabs (8, 8') are sized according to the floor assemblies (1, 1'), so that they provide a front hood vehicle in combination with the one floor assembly (1) and a front steering vehicle in combination with the other floor assembly (1').

## Revendications

1. Procédé de montage pour tracteur, en particulier pour tracteur à suspension sur ressort à lames, comprenant les étapes suivantes:
a) réalisation d'un cadre d'essieu de moteur (2) avec un cadre auxiliaire (3), des ressorts (4), des essieux (5 resp 7) et une unité de propulsion (6),
b) sélection d'un dessous de caisse individuel (1, 1') se composant d'une quantité d'au moins deux dessous de caisse différents (1, 1'), chaque dessous de caisse (1, 1) de la quantité de dessous de caisse (1, 1') procurant la stabilité et le poids propre du tracteur et est conçu comme pièce soudée pour différentes formes de véhicules, en particulier le capot avant et la cabine avancée, les dessous de caisse (1, 1') étant dimensionnés en accord avec le cadre d'essieu de moteur (2) de sorte que le cadre d'essieu de moteur (2) peut être utilisé au choix dans l'un des dessous de caisse (1) en tant que cadre d'essieu avant et dans l'autre dessous de caisse (1'), en tant que cadre d'essieu arrière,
c) introduction du cadre d'essieu de moteur (2) de la face inférieure dans le dessous de caisse sélectionné (1, 1') et vissage de ces derniers,
d) introduction d'un autre essieu (5 respectivement 7) avec des ressorts (4') depuis la face inférieure à l'autre extrémité dans le dessous de caisse (1, 1') et vissage de ces derniers, et
e) placement d'une cabine passager (8) sur la face supérieure du dessous de caisse (1, 1') après la réalisation de tous les travaux de montage à effectuer depuis la face inférieure sur le dessous de caisse (1, 1') et le cas échéant, le montage des roues (14).

2. Procédé de montage selon la revendication 1,
**caractérisé en ce que** tous les montages effectués depuis la face inférieure sont effectués sur le dessous de caisse (1) quand le dessous de caisse (1) est basculé sur le côté et est maintenu à hauteur de poitrine du monteur, ou quand le dessous de caisse (1) est placé sur la face supérieure en formant un angle de 180° autour du sens longitudinal (10), et/ou le dessous de caisse (1, 1') est placé sur le sol pour le montage de la cabine passager.

3. Procédé de montage selon l'une des revendications précédentes, **caractérisé en ce que**
- le dessous de caisse (1) est composé de plaques latérales (1 a) massives sensiblement verticales, ainsi que de plaques transversales (1 b) reliant les dernières et/ou en particulier
- en dessous du plancher de véhicule (1b1), des longerons (19) sont soudés ou vissés pour le logement de l'autre essieu (5 resp 7) et dont les ressorts (4') sont décalés vers l'arrière en particulier depuis le côté.

4. Procédé de montage selon l'une des revendications précédentes, **caractérisé en ce que**
- le dessous de caisse (2) est établi par liaison en particulier par soudage de longerons (9a, b) sélectionnés en fonction de l'unité de propulsion (6) avec au moins une traverse (12) en particulier au bout des longerons (9a, b), et
- vissage de ressorts (4a, b), d'autres essieux (5 resp 7) et d'une unité de propulsion (6) sur le cadre auxiliaire (3).

5. Procédé de montage selon l'une des revendications précédentes, **caractérisé en ce que**
- les essieux (5 respectivement 7) sont reliés tout d'abord avec les ressorts (4a, b) en un groupe de prémontage qui est vissé ensuite sur le cadre auxiliaire (3), en particulier avant l'introduction de l'unité de propulsion (6) dans le cadre auxiliaire (3), et/ou en particulier,
- des éléments de support (15a, b) adaptés à l'unité de propulsion respective (6) sont vissés avant l'insertion de l'unité de propulsion (6) sur le cadre auxiliaire (3), en particulier sur les longerons (9a, b).

6. Procédé de montage selon l'une des revendications précédentes, **caractérisé en ce que** les longerons (9a, b et/ou 19a, b) sont composés de profilés en particulier de profilés creux fermés, et/ou en particulier,
- les ressorts (4a, b) sont des ressorts à lames longitudinaux qui sont disposés sur la face inférieure des longerons (9a, b).

7. Procédé de montage selon l'une des revendications précédentes, **caractérisé en ce que** l'essieu (5 respectivement 7) est un essieu rigide, et présente en particulier des moyeux disposés aux extrémités et en particulier orientables, et/ou en particulier
- l'unité de propulsion (6) se composant en tant qu'unité d'un moteur (6a), d'un engrenage (6b) et en particulier de groupes auxiliaires tels que le démarreur, la dynamo qui sont introduits et vissés dans le cadre auxiliaire (3), à l'exception du radiateur (6c) qui est fixé séparément dans le cadre auxiliaire (3) et est relié avec le reste de l'unité de propulsion (6).

8. Tracteur en kit avec
- au moins deux parties de dessous de caisse (1, 1') pour différents formes de véhicules, en particulier, le capot avant et la cabine avancée,
- au moins une cabine passager (8) qui peut être disposée sur la face supérieure des parties de dessous de caisse (1, 1'),
- au moins deux unités de propulsion (6) qui se différencient par le mode de propulsion en particulier un moteur à combustion ou une propulsion électrique et/ou selon le fabricant et le type de moteur,
- au moins deux paires de longerons (9) qui sont construits en fonction des unités de propulsion (6),
- au moins une traverse (12)
- au moins un essieu moteur (5) et
au moins un essieu passif (7),
- respectivement une traverse (12), respectivement deux longerons (9) une unité de propulsion (6) et au chois un essieu moteur (5) ou un essieu passif (7) sont reliés entre eux pour former le cadre d'essieu de moteur (2),
- le cadre d'essieu de moteur (2) peut être fixé en tant qu'unité de prémontage sur la face inférieure des parties de dessous de caisse (1, 1') et
- les dessous de caisse (1, 1') sont dimensionnés en fonction du cadre d'essieu de moteur (2) de sorte que le cadre d'essieu de moteur (2) peut être utilisé au choix dans l'un des dessous de caisse (1) en tant que cadre d'essieu avant et dans l'autre dessous de caisse (1') en tant que cadre d'essieu arrière.

9. Tracteur en kit selon la revendication 8, **caractérisé en ce que**
- le dessous de caisse (1) comprend plusieurs alternatives de points de fixation, en particulier des perçages de fixation (16) pour la fixation d'un cadre d'essieu de moteur (2), qui présente des longerons (9) ainsi qu'au moins une traverse (12), et/ou en particulier
- le kit comprend plusieurs traverses (12a, b) et/ou en particulier,
- le kit comprend plusieurs ressorts (4, 4') y compris des éléments supports adaptés (15) par rapports au cadre auxiliaire (3) et/ou en particulier,
- le kit comprend plusieurs essieux moteurs (5), en particulier un essieu moteur orientable (5a) et un essieu moteur (5b) non orientable.

10. Tracteur en kit selon l'une des revendications précédentes, **caractérisé en ce que**
- le kit comprend plusieurs dessous de caisse (1, 1') pour différentes formes de véhicule, en particulier des capots avant et une cabine avancée, et/ou en particulier
- le kit comprend des essieux passifs différents (7, 7'), en particulier des essieux passifs orientables ou non orientables, et/ou
- le kit ne comprend qu'une cabine de passager (8) ou plusieurs cabines passager (8, 8') qui correspondent dans une série de pièces individuelles, en particulier, la colonne A, la colonne B respectivement le cadre latéral, les portes, le pare-brise, le toit.

11. Tracteur en kit selon l'une des revendications précédentes, **caractérisé en ce que**
- les dessous de caisse (1, 1') sont dimensionnés en fonction du cadre d'essieu de moteur (2) de sorte que le cadre d'essieu de moteur (2) peut être utilisé au choix dans l'un des dessous de caisse (1) en tant que cadre d'essieu avant et dans l'autre dessous de caisse (1') en tant que cadre d'essieu arrière, et/ou en particulier
- une cabine passager (8) respectivement les différentes cabines passager (8, 8') sont dimensionnées en fonction des dessous de caisse (1, 1') de sorte qu'elles forment ensemble avec l'un des dessous de caisse (1) un véhicule à capot avant et ensemble avec l'autre dessous de caisse (1 ") un véhicule à cabine avancée.
